(19) **Europäisches Patentamt**

**European Patent Office**

**Office européen des brevets**

(11) **EP 1 399 307 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(21) Anmeldenummer: **02730276.9**

(22) Anmeldetag: **24.05.2002**

(51) Int Cl.:
**B29C 45/50** (2006.01)

(86) Internationale Anmeldenummer:
**PCT/EP2002/005705**

(87) Internationale Veröffentlichungsnummer:
**WO 2002/098626 (12.12.2002 Gazette 2002/50)**

(54) **BETRIEBSVERFAHREN FÜR EINE SPRITZGUSSMASCHINE**

METHOD FOR OPERATING AN INJECTION MOULDING MACHINE

PROCEDE DE MOULAGE PAR INJECTION

(84) Benannte Vertragsstaaten:
**AT DE FR IT**

(30) Priorität: **06.06.2001 DE 10127426**

(43) Veröffentlichungstag der Anmeldung:
**24.03.2004 Patentblatt 2004/13**

(73) Patentinhaber: **Bayer MaterialScience AG**
**51368 Leverkusen (DE)**

(72) Erfinder:
• **KAMINSKI, Axel**
**42929 Wermelskirchen (DE)**

• **SCHÜRMANN, Klaus**
**59199 Bönen (DE)**

(56) Entgegenhaltungen:
**EP-A- 0 484 549**       **DE-A- 19 712 494**

• **PATENT ABSTRACTS OF JAPAN vol. 1995, no. 08, 29. September 1995 (1995-09-29) & JP 07 112464 A (NISSEI PLASTICS IND CO), 2. Mai 1995 (1995-05-02)**

## Beschreibung

Die Erfindung betrifft ein Verfahren zum Betrieb einer Spritzgussmaschine zur Verarbeitung von thermoplastischen Kunststoffschmelzen, mit einer Einspritzeinheit und einer Gussform, bei der die Einspritzeinheit eine über Führungsmittel im Rohrzylinder bewegliche Schnecke aufweist, die hinsichtlich ihrer Start- und End/Stoppposition im Rohrzylinder steuerbar ist, wobei die Schnecke in ihrer End/Stoppposition ein vergrößertes mit Schmelze gefülltes Restvolumen im Rohrzylinder freilässt.

Aus der Offenlegungsschrift DE 195 14 070 A1 ist eine Spritzgussmaschine bekannt geworden, mit einer Einspritzeinheit du einer Gussform, bei der die Einspritzeinheit eine über Führungsstangen im Rohrzylinder bewegliche Schnecke aufweist, die sowohl hinsichtlich ihrer Start- und End/Stoppposition im Rohrzylinder steuerbar ist. Hierbei ist zusätzlich eine gesteuerte Vibration im Bereich der End/Stoppposition vorgesehen. Über das Restvolumen im Bereich der End-/Stoppposition wird in der DE 195 14 070 A1 nichts ausgesagt.

Aus JP-A-7112464 ist ein Spritzgussverfahren bekannt, bei dem eine Schnecke zwischen einer Ausgangsposition und einer Endposition bewegt wird, wobei in der Endposition eine Restmasse der Schmelze vor der Schnecke verbleibt.

Kleine Mengen an Gasen in der Kunststoffschmelze, die durch z.B. Luft beim Einzug des Kunststoffgranulats, durch chemische oder physikalische Reaktionen beim Aufschmelzen oder durch feuchtes Material hervorgerufen werden, können in den Schneckenvorraum geschleppt werden und verursachen während des Einspritzens silbrige Oberflächenschlieren am Formteil.

Die Gasblasen gelangen in der Mitte des Strömungskanals an die Fließfront des Kunststoffs. Der Druck nimmt in Richtung der Fließfront gesehen immer mehr ab, und die Gasblasen werden größer. An der Fließfront selbst herrscht zunächst Normaldruck, dort platzen die Blasen auf, werden an der kalten Werkzeugwand abgerollt und verstreckt. Dies führt (je nach Farbe des Kunststoffs) zu silbrigen und U-förmigen gegen die Fließrichtung offenen Schlieren.

Zur Vermeidung dieser Schlieren werden heute folgende Maßnahmen ergriffen:

Vortrocknung des Kunststoffes

Vor der Verarbeitung wird der Kunststoff mehrere Stunden bei erhöhter Temperatur (80°C - 120°C) in einem Zusatzgerät getrocknet.

Die Vortrocknung hat folgende Nachteile: Hierzu nötige Zusatzgerät erhöhen den Aufwand für die Anschaffung, Wartung und den Gesamtenergieverbrauch der Spritzgussmaschine. Ein unzureichend getrocknetes Material führt zu Fehlern an der Formteiloberfläche gemäß der oben beschriebenen Art.

Verwendung einer Entgasungsplastifiziereinheit

Bei der Entgasungsplastifiziereinheit treten die im Kunststoffmaterial mitgeschleppten Gase durch eine Entgasungsöffnung im Zylinder aus. Die Gasblasen werden in einer Kompressionszone stark komprimiert, der Druck in den Blasen beträgt dann mehrere hundert Bar. Im Bereich der Entgasungsöffnung herrscht Normalatmosphäre, der Druckunterschied führt zum Aufplatzen der Gasblasen, und das Gas entweicht durch die Entgasungsöffnung.

Nachteile dieser Verfahrensführung sind eine schwierige Prozessführung, Möglichkeit des Kunststoffaustritts durch die Entgasungsöffnung, gesonderter Aufwand für eine Sonderplastifiziereinheit und für Zusatzeinrichtungen, sowie eine reduzierte Plastifizierleistung

Aufgabe der Erfindung ist es ein Verfahren bereitzustellen, die die Nachteile der bekannten Konstruktion und Verfahren vermeiden und eine höhere Schlierenbildung verhindern. Die Aufgabe wird durch die Merkmale des Anspruchs 1 gelöst.

Gegenstand der Erfindung ist ein Verfahren zum Betrieb einer Spritzgussmaschine zur Verarbeitung von thermoplastischen Kunststoffschmelzen, mit einer Einspritzeinheit und einer Gussform, bei der die Einspritzeinheit eine über Führungsmittel im Rohrzylinder bewegliche Schnecke aufweist, die hinsichtlich ihrer Start- und End/Stoppposition im Rohrzylinder steuerbar ist, dadurch gekennzeichnet, dass die Schnecke beim Austreiben der Kunststoffschmelze auf einer End/Stoppposition angehalten wird und die Schnecke (4) in ihrer End/Stoppposition im Rohrzylinder (5) ein mit Schmelze gefülltes Volumen zwischen Schneckenspitze (2) und Zylinderkopf (3) von mehr als $\frac{\pi}{4} \bullet D^3$ bis maximal $\frac{3\pi}{4} \bullet D^3$ freilässt, wobei D der Schneckendurchmesser ist.

Ein Düsenadapter kann vor dem Zylinderkopf des Rohrzylinders angebracht werden und die Schlierenbildung an der Formteiloberfläche in gleicher Weise verhindert.

Der bevorzugt einzusetzende Adapter hat ein Volumen von mehr als $\dfrac{\pi}{4} \bullet D^3$ *(entspr. 1D Schneckenhub)* bis max. ein dem Schussvolumen vergleichbares Volumen an Schmelze.

Der überraschende Effekt des erfindungsgemäßen Verfahrens lässt sich grundsätzlich nachgängig wie folgt erklären: Die Kunststoffschmelze wird während des Einspritzvorgangs einem hohen Druck ausgesetzt. Das aus dem Granulat stammende in der Schmelze vorhandene Gas geht nun in der Schmelze in Lösung. Beim nächsten Einspritzvorgang wird diese Schmelze (z.B. *aus dem Adapter*) in das Werkzeug gespritzt. Das Gas bleibt in Lösung und gelangt nicht als Gasblase an die Fließfront, es kommt folglich nicht zu einer Schlierenbildung wie bei den bekannten Verfahren. Auch wenn das Formteilvolumen größer ist als das Volumen des Adapters, treten trotzdem keine Schlieren auf. Dies lässt sich möglicherweise mit dem Druckanstieg längs des Fließweges erklären. Mit fortschreitender Formteilfüllung steigt der Druck im Schneckenvorraum an, und somit der Schmelzedruck. Je höher der Druck ist desto größer das Gaslösungsvermögen. Da die Schmelze aus dem Adapter als erstes in das Werkzeug gespritzt wird, kann das Gas, das beim neuen Dosiervorgang mit geschleppt wurde in Lösung gehen, bevor die Schmelze ins Werkzeug gelangt.

Die Erfindung kann insbesondere unter anderem nach einer der folgenden alternativen Bauformen realisiert werden:

Der Zylinderkopf einer Spritzgussmaschine wird mit vergrößertem Schmelzevorraum ausgestattet.

Zwischen Düse und Zylinderkopf wird ein Adapterstück zur Erzeugung eines vergrößerten Schmelzevorraums angebracht.

Die Maschinendüse und/oder der Heißkanal des Spritzgußwerkzeuges wird gegebenenfalls zusätzlich vergrößert um das gewünschte Schmelzerestvolumen zu erzeugen.

Der Rohrzylinder wird insbesondere entsprechend länger als die Schnecke ausgeführt.

Der Schneckenhub kann mit Hilfe eines lösbaren mechanischen Anschlags begrenzt werden. Zu Reinigungszwecken kann dieser Anschlag kurzfristig entfernt und nach Reinigung des Polsteraumes wieder angebracht werden.

Mit der Erfindung ergeben sich die folgenden Vorteile gegenüber den aus dem Stand der Technik bekannten Verfahren:

Die Verwendung eines Düsenadapters ergibt eine höhere Prozesssicherheit. Das Volumen aus dem Düsenadapter kann nicht zusätzlich in das Werkzeug gespritzt werden, da die Schnecke sich nur bis zu einer vorbestimmten Entfernung zum Zylinderkopf bewegt. Bedienungsfehler werden dadurch vermieden. Mit Hilfe eines zwischengeschalteten Düsenadapters können konventionelle Spritzgussmaschinen kostengünstig und ohne größeren Aufwand umgerüstet werden.

Die Anwendung des erfindungsgemäßen Verfahrens erspart ggf. die Vortrocknung des thermoplastischen Kunststoffes, der auf der Spritzgussmaschine verarbeitet wird.

Da sämtliche thermoplastisch verarbeitbaren Werkstoffe zur Ausbildung von Schlieren neigen, kann das Verfahren für alle bekannten Thermoplaste zur Anwendung kommen.

Bevorzugt sind folgende Thermoplaste einsetzbar: PC, ABS, PBT, SAN, PA, TPU, PET, PS, POM, Polyolefine, insbesondere PP, sowie deren Mischungen und Mischungen mit anderen Kunststoffen z.B. Mischungen aus PC und ABS.

Um die Oberflächenschlieren zu vermindern, kann grundsätzlich über die Maschineneinstellung ein Restmassepolster entsprechend einem Volumen von mehr als 1D Schneckenhub (Querschnittsfläche der Schnecke • Länge) eingestellt werden.

Gewöhnlich beträgt das nutzbare Schussvolumen bei Spritzgießmaschinen etwa das 1 bis 3fache (1D bis 3D) des Schneckendurchmessers multipliziert mit dem Rohrzylinderquerschnitt.

Oberhalb von einem Volumen entsprechend einem Hub von 3D bei konventionellen Maschinen wird verstärkt Schlierenbildung an den Formteilen beobachtet.

Das nutzbare Schussvolumen kann bei Nutzung der erfindungsgemäßen Vorrichtung schlierenfrei bis auf ein Volumen entsprechend wenigstens 4D Hub der Schnecke vergrößert werden.

Hieraus resultiert ein erheblicher wirtschaftlicher Vorteil, da kleinere Spritzgussmaschinen zur Herstellung größerer Formteile verwendet werden können.

Die Einstellung eines Restmassepolsters durch Maschineneinstellung der Schnecke ist deswegen nicht vorzuziehen, weil bei Bedienungsfehlern das große Restmassepolster mit in das Werkzeug (Gussform) gespritzt werden kann und damit Maschine und Formwerkzeug beschädigt werden können.

Die Erfindung wird nachfolgend anhand der Figuren durch ein Beispiel, welches jedoch keine Beschränkung der Erfindung darstellt, näher erläutert.

Es zeigen:

Fig. 1     den schematischen Querschnitt durch einen Strömungskanal in einem Spritzgusswerkzeug

Fig.2     den Querschnitt durch ein konventionelles Spritzgusswerkzeug

Fig.3     den Querschnitt durch ein erfindungsgemäß modifiziertes Spritzgusswerkzeug

**Beispiel**

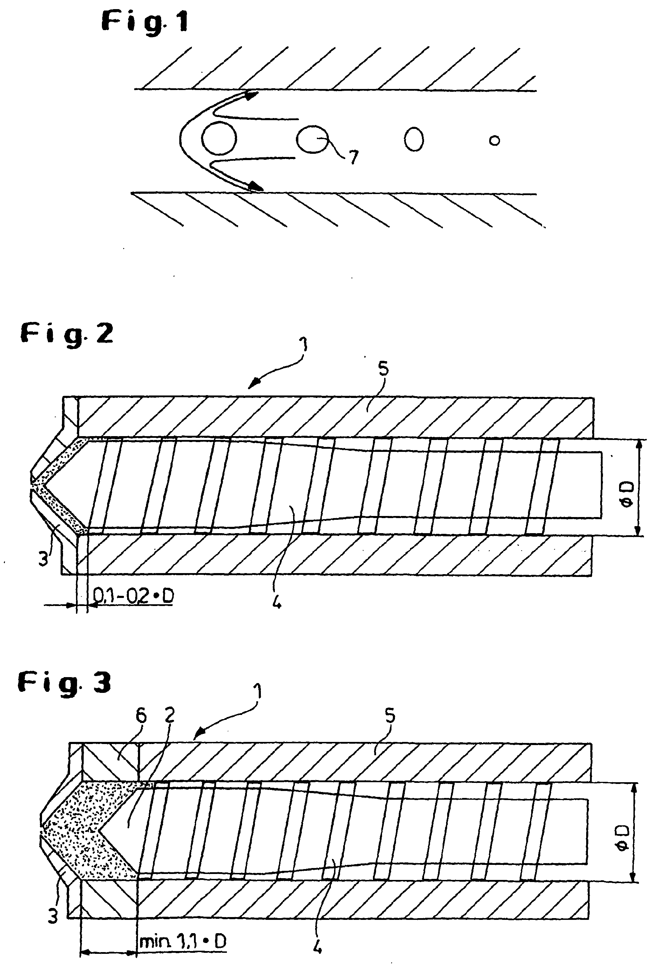

Fig. 1 zeigt einen schematischen Querschnitt durch einen Strömungskanal in einem Spritzgusswerkzeug. Es wird hiermit nur demonstriert, dass sich auf Grund des Druckgradienten zwischen Schnecke und Gussform eine Vergrößerung der Gasvolumina 7 in Richtung der Gussform ergibt.

In Fig. 2 ist der Querschnitt durch ein konventionelles Spritzgusswerkzeug wiedergegeben. Hier zeigt sich das normale geringere Schmelzevolumen nach Ende der Nachdruckphase im Bereich des Rohrzylinders 5 vor der Schneckenspitze 2.

Hierbei ist zu erkennen, dass nach dem Dosieren und dem Vortrieb der Schnecke 4 nur sehr wenig Schmelze zwischen Schneckenspitze 2 und Zylinderkopf 3 des Rohrzylinders 5 im Spritzgusswerkzeug 1 verbleibt. Das Restmassepolster beträgt gemäß dem Stand der Technik typischerweise das 0,1 bis 0,2fache des Dosierweges mal dem Rohrquerschnitt. Da der nutzbare Dosierweg nach dem Stand der Technik maximal das dreifache des Schneckendurchmessers beträgt, resultiert ein Restmassepolster von maximal $(0{,}6 \cdot \underline{D}) \bullet \dfrac{\pi}{4} D^2$.

Figur 3 zeigt den Querschnitt durch ein modifiziertes Spritzgießwerkzeug 1 mit einem Adapterstück 6. Der Adapter 6 erzeugt das große Schmelzevolumen vor der Schneckenspitze nach Ende der Nachdruckphase durch konstruktive Änderung. Vergleich man beide Figuren ist zu erkennen, dass in Figur 3 das Schmelzepolster wesentlich größer ist als in Figur 2. Das Volumen des Schmelzepolsters beträgt $1{,}1 \, \dfrac{\pi}{4} \bullet D^3$ bei dem Spritzgießwerkzeug 1 mit Adapter 6.

Mit Hilfe des Adapters wurden in einem Spritzgusswerkzeug 1 schlierenfreie Formteile aus unterschiedlichen Thermoplasten spritzgegossen wie im Folgenden dargestellt wird.

In Tabelle 1 sind Ergebnisse verschiedener Versuche (1-5 Vergleichsversuche, A-E erfindungsgemäße Versuche) dargestellt.

| Nr. | Material | Handelsname Hersteller Bayer AG | Formteil | Auslastung | Silberschlierenanteil | Polstervolumen |
|---|---|---|---|---|---|---|
| 1 | PC/ABS Blend | Bayblend 1468 | End-Cap | ca. 4 D | 96% | 23,8 cm$^3$ |
| A | PC/ABS Blend | Bayblend 1468 | End-Cap | ca. 4 D | 22,50 % | 95,3 cm$^3$ |
| 2 | PC | Makrolon 2805 | End-Cap | ca. 4 D | 30 % | 23,8 cm$^3$ |
| B | PC | Makrolon 2805 | End-Cap | ca. 4 D | 0 % | 95,3 cm$^3$ |
| 3 | PC | Makrolon 2805 | Siapelkasten | ca. 2,7 D | ca. 50 % | 15,9 cm$^3$ |
| C | PC | Makrolon 2805 | Stapelkasten | ca. 2,7 D | <3,5 % | 87,4 cm$^3$ |
| 4 | PC/ABS Blend | Bayblend 1468 | Stapelkasten | ca. 2,7 D | ca. 50 % | 15,9 cm$^3$ |
| D | PC/ABS Blend | Bayblend 1468 | Stapelkasten | ca. 2,7 D | <3,5 % | 87,4 cm$^3$ |
| 5 | PC/ABS Blend | Bayblend 1468 | Netzladegerät | ca. 3,3 D | 2,30 % | 5,8 cm$^3$ |

Tabelle fortgesetzt

| Nr. | Material | Handelsname Hersteller Bayer AG | Formteil | Auslastung | Silberschlierenanteil | Polstervolumen |
|-----|----------|----------------------------------|----------|------------|----------------------|----------------|
| E | PC/ABS Blend | Bayblend 1468 | Netzladegerät | ca. 3,3 D | 0,90 % | 34,6 cm³ |

Die Versuche 1-2, A, B wurden auf einer Spritzgießmaschine der Firma Engel Typ ES 700/150 mit einem Schneckendurchmesser von 45 mm gefahren. Es wurde ein haubenförmiges Formteil mit der Bezeichnung "End Cap" hergestellt. Der Dosierweg entsprach dabei ca. 4 mal dem Schneckendurchmesser (s. Tabelle Auslastung).

Im ersten Versuch wurde ein PC-ABS-Blend eingesetzt. Im ersten Teil der Versuches betrug das Polstervolumen 23,8 cm³. Der Anteil an Ausschußteilen lag bei 96 %, eine wirtschaftliche Produktion wäre nicht möglich gewesen. Im zweiten Teil des Versuchs wurde vor der Schneckenspitze ein Polstervolumen von ca. 95,3 cm³ mittels Adapter erzeugt. Der Ausschussanteil sank auf 22,5 %, was eine wesentliche Verbesserung darstellt.

Bei dem zweiten Versuch wurde an Stelle von PC-ABS-Blend ein reines PC verwendet. Ebenfalls wurde erst mit einem Polstervolumen von 23,8 cm³ gearbeitet. Der Ausschussanteil lag bei ca. 30 %. Mit dem schon erwähnten Polstervolumen von 95,3 cm³ trat kein Fehlerteil mehr auf.

Die Versuche 3-4, C, D wurden auf derselben Maschine durchgeführt. Das gefertigte Formteil war diesmal ein Stapelkasten. Der Dosierweg entsprach diesmal 2,7 mal dem Schneckendurchmesser. Das Polstervolumen lag bei diesem Versuch bei 87,4 cm³. Mit Polstervolumen von 15,9 cm³ lag der Anteil an Silberschlieren bei Versuch 3 bei 50 %, und der Anteil an Formteilen mit Silberschlieren lag mit schon erwähntem Polstervolumen bei ca. 3,5 % (eingesetzter Werkstoff: PC).

Im vierten Versuch wurde PC-ABS-Blend eingesetzt und der Ausschussanteil sank mit hohem Polstervolumen von ca. 50 % auf ca. 3,5 %.

Versuch 5 und E wurde auf einer Maschine der Firma Arburg, Typ 320-90-750, Schneckendurchmesser 30 mm, durchgeführt. Bei dem Formteil handelt es sich um einen Deckel für Netzladegeräte. Mit jedem Zyklus wurden gleichzeitig 4 Teile erzeugt (4-fach Werkzeug). Die Auslastung betrug 3,3 mal dem Schneckendurchmesser. Das Polstervolumen lag bei ca. 34,6 cm³. Die Produktion mit einem Polstervolumen von 5,8 cm³ ergab einen Ausschussanteil von ca. 2,3 %, mit hohem Polstervolumen konnte der Ausschussanteil auf 0,9 % gesenkt werden.

**Patentansprüche**

1. Verfahren zum Betrieb einer Spritzgussmaschine zur Verarbeitung von thermoplastischen Kunststoffschmelzen, mit einer Einspritzeinheit und einer Gussform, bei der die Einspritzeinheit eine über Führungsmittel im Rohrzylinder bewegliche Schnecke aufweist, die hinsichtlich ihrer Start- und End/Stoppposition im Rohrzylinder steuerbar ist, **dadurch gekennzeichnet, dass** die Schnecke beim Austreiben der Kunststoffschmelze auf einer End/-Stoppposition angehalten wird und die Schnecke (4) in ihrer End/Stoppposition im Rohrzylinder (5) ein mit Schmelze gefülltes Volumen zwischen Schneckenspitze (2) und Zylinderkopf (3) von mehr als $\frac{\pi}{4} \bullet D^3$ bis maximal $\frac{3\pi}{4} \bullet D^3$ freilässt, wobei D der Schnekkendurchmesser ist.

**Revendications**

1. Procédé d'exploitation d'une presse d'injection pour le traitement de matière thermoplastiques fondues, avec une unité d'injection et avec un moule, sur laquelle l'unité d'injection comporte une vis sans fin mobile dans le cylindre tubulaire par l'intermédiaire de moyens de guidage, qui peut être contrôlée au niveau de sa position de démarrage et de sa position finale/d'arrêt dans le cylindre tubulaire, **caractérisé en ce que** lors de l'expulsion de la matière plastique fondue, la vis sans fin s'arrête dans une position finale/d'arrêt et **en ce que** dans sa position finale/d'arrêt dans le cylindre tubulaire (5), la vis sans fin (4) laisse libre un volume rempli de matière fondue entre la pointe de la vis sans fin (2) et la tête du cylindre (3) qui est supérieur à $\frac{\pi}{4} \bullet D^3$ jusqu'à un maximum de $\frac{3\pi}{4} \bullet D^3$, D étant le diamètre de la vis sans fin.

**Claims**

1. A method of operating an injection moulding machine for processing thermoplastics melts, having an injection unit and a casting mould, in which the injection unit comprises a screw movable in the tubular cylinder via guide means, which screw may be controlled with respect to its start and end/stop position in the tubular cylinder, **characterised in that** the screw (4) is stopped at an end/stop position on ejection of the plastics melt and in its end/stop position, the screw leaves a volume, filled with melt, in the tubular cylinder (5) between the screw tip (2) and the cylinder head (3) of more than $\frac{\pi}{4} \bullet D^3$ up to at most $\frac{3\pi}{4} \bullet D^3$ , wherein D is the screw diameter.

# Fig. 1

# Fig. 2

$0,1 - 0,2 \cdot D$

$\varnothing D$

# Fig. 3

min. $1,1 \cdot D$

$\varnothing D$